# EUROPEAN PATENT APPLICATION

(11) **EP 3 872 782 A1**
(43) Date of publication of application: **01.09.2021**
(21) Application number: 21159611.9
(22) Date of filing: 26.02.2021
(51) Int. Cl.: G08G 1/01, G08G 1/09, G08G 1/0967, H04L 29/08

(54) **METHOD AND APPARATUS FOR ISSUING TRAFFIC INFORMATION, DEVICE, STORAGE MEDIUM AND SYSTEM**

(30) Priority: 28.02.2020 CN 202010131511
(71) Applicant: BEIJING BAIDU NETCOM SCIENCE AND TECHNOLOGY CO. LTD., 100085 Beijing (CN)
(72) Inventor: ZHANG, Zhuhua, Beijing, 100085 (CN); BAO, Zewen, Beijing, 100085 (CN)
(74) Representative: V.O.

(57) **Abstract**

In accordance with example embodiments of the present disclosure, a method and apparatus for issuing traffic information, a device, a computer-readable storage media, and a system are provided for use in intelligent traffic. The method for issuing traffic information includes: receiving traffic information related to a first geographic range perceived by a first field device from the first field device served by a central device. The method further includes determining a target object based on the traffic information, the target object including at least one of: at least one second field device served by the central device, or at least one external server, where the at least one second field device perceives a second geographic range different from the first geographic range. The method further includes providing the traffic information to the target object. In this way, the traffic information can be more efficiently and rationally issued, thereby contributing to improving the safety and efficiency of the traffic.

## Description

### TECHNICAL FIELD

Embodiments of the present disclosure generally relate to the field of intelligent transportation, and more particularly, to a methods and apparatus for issuing traffic information, a device, a computer-readable storage media, and a system.

### BACKGROUND

In recent years, as a brand-new technology, Intelligent Transportation System (ITS) uses advanced science and technology to realize intelligent traffic management by comprehensively considering factors such as road, traffic, people and environment, which brings about possibility and hope for solving road traffic problems. With the development of communication networks, particularly with the deployment of 5G communication networks, ITS includes vehicle-side, road-side, and cloud-side, and it is desirable to support "human-vehicle-road-cloud" collaborative communication and interaction, to provide different services for different types of vehicles, including high-level autonomous vehicles, communication-capable networked vehicles, and existing mass transit vehicles. As a result, the safety and the passing efficiency of driving are improved, and intelligent traffic is realized.

### SUMMARY

According to example embodiments of the present disclosure, a solution to issuing traffic information is provided.

In a first aspect of the present disclosure, a method for issuing traffic information is provided. The method includes receiving traffic information related to a first geographic range perceived by a first field device from the first field device served by a central device. The method further includes determining a target object based on the traffic information, the target object including at least one of: at least one second field device served by the central device, or at least one external server, where the at least one second field device perceives a second geographic range different from the first geographic range. The method further includes providing the traffic information to the target object.

In a second aspect of the present disclosure, a method for issuing traffic information is provided. The method includes receiving, by a first field device, environmental data within a first geographic range perceived by a sensing device. The method further includes generating first traffic information related to the first geographic range based on the environmental data. The method further includes providing the first traffic information to a central device serving the first field device.

In a third aspect of the present disclosure, an apparatus for issuing traffic information is provided. The apparatus includes a traffic information receiving module configured to receive traffic information related to a first geographic range perceived by a first field device from the first field device served by a central device. The apparatus further includes a target object determining module configured to determine a target object based on the traffic information, the target object including at least one of: at least one second field device served by the central device, or at least one external server, wherein the at least one second field device perceives a second geographic range different from the first geographic range. The apparatus further includes a traffic information providing module configured to provide the traffic information to the target object.

In a fourth aspect of the present disclosure, an apparatus for issuing traffic information is provided. The apparatus includes an environmental data receiving module configured to receive environmental data within a first geographic range perceived by a sensing device at a first field device. The apparatus further includes a traffic information generating module configured to generate first traffic information related to the first geographic range based on the environmental data. The apparatus further includes a traffic information providing module configured to provide the first traffic information to a central device serving the first field device.

In a fifth aspect of the present disclosure, an electronic device is provided. The electronic device includes one or more processors; and a storage apparatus for storing one or more programs, where the one or more programs, when executed by the one or more processors, cause the one or more processors to implement the method according to the first aspect of the present disclosure.

In a sixth aspect of the present disclosure, an electronic device is provided. The electronic device includes one or more processors; and a storage apparatus for storing one or more programs, where the one or more programs, when executed by the one or more processors, cause the one or more processors to implement the method according to the first aspect of the present disclosure.

In a seventh aspect of the present disclosure, a computer readable storage medium is provided. The computer readable storage medium stores a computer program, where the computer program when executed by a processor, implements the method according to the first aspect of the present disclosure.

In an eighth aspect of the present disclosure, a computer readable storage medium is provided. The computer readable storage medium stores a computer program, where the computer program when executed by a processor, implements the method according to the first aspect of the present disclosure.

In a ninth aspect of the present disclosure, a system for issuing traffic information is provided. The system includes a central platform subsystem including the apparatus according to the third aspect of the present disclosure. The system further includes at least one of a roadside subsystem or an edge computing subsystem, the roadside subsystem or the edge computing subsystem including the apparatus according to the fourth aspect of the present disclosure.

In a tenth aspect of the present disclosure, a system for issuing traffic information is provided. The system includes a central platform subsystem including the electronic device according to the fifth aspect of the present disclosure. The system further includes at least one of a roadside subsystem or an edge computing subsystem, the roadside subsystem or the edge computing subsystem including the electronic device according to the sixth aspect of the present disclosure.

It is to be understood that what is described in the summary portion of the present disclosure is not intended to limit the critical or important features of embodiments of the disclosure, nor is it intended to limit the scope of the disclosure. Other features of the present disclosure will become readily apparent from the following description.

### Brief DESCRIPTION OF THE DRAWINGS

The above and other features, advantages and aspects of embodiments of the present disclosure will become more apparent from the following detailed description when taken in conjunction with the accompanying drawings. In the drawings, the same or similar figures denote the same or similar elements.
Fig. 1 illustrates a schematic diagram of an example environment in which various embodiments of the present disclosure can be implemented;
Fig. 2 illustrates a block diagram of a system for issuing traffic information according to some embodiments of the present disclosure;
Fig. 3 illustrates a signaling diagram between a field device, a central device, and an external device according to some embodiments of the present disclosure;
Fig. 4 illustrates a flow chart of a process for issuing traffic information at a central device side according to some embodiments of the present disclosure;
Fig. 5 illustrates a flow diagram of a process for issuing traffic information at a field device side according to some embodiments of the present disclosure;
Fig. 6 shows a schematic block diagram of an apparatus for issuing traffic information on a central equipment side according to some embodiments of the present disclosure;
Fig. 7 shows a schematic block diagram of an apparatus for issuing traffic information at a field device side according to some embodiments of the present disclosure;
Fig. 8 illustrates a block diagram of a computing device capable of implementing various embodiments of the present disclosure.

### DETAILED DESCRIPTION

Embodiments of the present disclosure will be described in more detail below with reference to accompanying drawings. While certain embodiments of the disclosure have been shown in the drawings, it is to be understood that the disclosure may be embodied in various forms and should not be construed as limited to embodiments set forth herein, but rather the embodiments are provided for a more thorough and complete understanding of the disclosure. It is to be understood that the drawings and embodiments of the present disclosure are for illustrative purposes only and are not intended to limit the scope of protection of the disclosure.

In the description of the embodiments of the present disclosure, the term "including" and its analogous terms are to be understood as open-ended, i.e., "including, but not limited to." The term "based on" is to be understood as "based at least in part on." The term "an embodiment" or "the embodiment" is to be understood as "at least one embodiment". The terms "first", "second" etc. may refer to different or the same object. Other explicit and implicit definitions may also be included below.

As mentioned above, in the intelligent transportation system (ITS), the control of a transportation means, such as a vehicle, is related to an environment perception capability and a communication capability of the transportation means itself. At present, intelligentization and networking of transportation means are developing.

From an intelligent point of view, the intelligent grading of transportation means ranges from driving assistance to full autonomous driving. However, the intelligent transportation means is divided according to the intelligent degree of the transportation means itself, and the transportation means itself does not necessarily have the ability to communicate with other devices, that is, the intelligent transportation means is the intelligentialize of a single vehicle. For example, for an autonomous driving vehicle of the L4/L5 level, it is required to deploy a camera, a laser radar, a millimeter wave radar, and other devices on the vehicle, and adjust the motion state of the autonomous vehicle in real time by sensing the surrounding environment of the vehicle. Due to the limitation of a single vehicle, even if the vehicle is an intelligent vehicle of the highest level, there are still problems such as shielding, limited sensing distance, and the like. Therefore, it is necessary to compensate for the existing deficiencies of a high-intelligent vehicle, and improve the intelligence level of a low-intelligent vehicle in other ways.

From a networking perspective, from conventional networking auxiliary information exchange (such as navigation information acquisition, etc.) to networking collaborative decision-making and control (collaborative planning control for vehicle between vehicle-to-vehicle and vehicle-to-road), the networked dimension of the transportation means primarily focuses on the degree of communication between the vehicle-to-vehicle, vehicle- to-cloud, vehicle-to-participant, and the like. The higher the networking level, the better the information that can be shared between transportation means. However, in the present market, many transportation means (for example, vehicles in stock) do not have a networking functionality or only have an initial networking functionality. Therefore, it is also desirable to provide a manner in which a vehicle with a low networking level can also be involved in a high-level networking to realize intelligent control of an overall traffic system.

According to an embodiment of the present disclosure, a solution to issuing traffic information is proposed. In this solution, one or more types of traffic information related to the perceived geographic range are obtained at a field subsystem such as a roadside subsystem, and an edge subsystem. Such traffic information may indicate traffic events, traffic conditions, or traffic signals within the perceived geographic range. The field subsystem may provide the obtained traffic information to the central platform subsystem. The central platform subsystem provides traffic information to other field subsystems or third-party platforms served based on the type or specific content of the traffic information. The issuing of traffic information can be facilitated by the aggregation and transfer of traffic information by the central platform subsystem. In this way, on the one hand, the issuing range of the traffic information is extended, and on the other hand, different traffic information may be issued more reasonably. Therefore, with the solution of the present disclosure, traffic information may be issued more efficiently and rationally, which contributes to improving the safety and efficiency of traffic.

Embodiments of the present disclosure will be described in detail below with reference to the accompanying drawings.

### Example environment

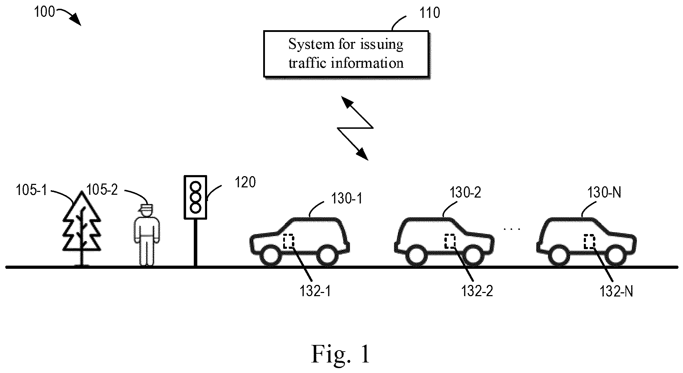

Fig. 1 illustrates a schematic diagram of an example environment 100 in which various embodiments of the present disclosure may be implemented. The example environment 100 includes one or more transportation means 130-1, 130-2, ..., 130-N. For ease of description, transportation means 130-1, 130-2, ..., 130-N may be collectively or individually referred to as transportation means 130. As used herein, a transportation means refers to any type of instrument that is capable of carrying and moving people and/or objects. In Fig. 1 and other figures and descriptions herein, a transportation means 130 is illustrated as a vehicle. The vehicle may be a motor vehicle or a non-motor vehicle, examples of which include, but are not limited to, a car, a sedan, a truck, a bus, an electric vehicle, a motorcycle, a bicycle, and the like. However, it should be understood that a vehicle is only one example of the transportation means. The embodiments of the present disclosure are equally applicable to transportation means other than a vehicle, such as a boat, a train, an aircraft, and the like.

One or more of the transportation means 130 in the environment 100 may be transportation means with certain autonomous driving capabilities, also referred to as unmanned transportation means. Of course, another or some of the vehicles 130 in the environment 100 may be vehicles that do not have autonomous driving capabilities or have only driving assistance capabilities. Such a transportation means may be controlled by a driver. The integrated device or removable device in one or more transportation means 130 may have the ability to communicate with other devices based on one or more communication technologies, such as by using vehicle to vehicle (V2V) technology, vehicle to infrastructure (V2I) technology, vehicle to Network (V2N), vehicle to everything (V2X) technology, or any other communication technology, to communicate with other vehicles or other devices. The transportation means 130 may be equipped with positioning apparatus to determine its own position.

In addition to the transportation means 130, there may be other objects present in the environment 100, such as movable or non-movable objects such as animals, plants 105-1, human 105-2, transportation facilities, and the like. Traffic facilities include objects for guiding traffic and indicating traffic rules, such as traffic lights 120, traffic signs (not shown), streetlights, and the like. The objects outside the transportation means are collectively referred to as exterior objects 105.

The system 110 for issuing traffic information for the transportation means 130 is also deployed in the environment 100, and may also be referred to as a vehicle-road-cloud collaboration system. The system 110 for issuing traffic information is configured to acquire at least traffic information of an area in which the transportation means 130 is located and to provide the traffic information to the transportation means 130 and/or to control travel of the transportation means 130. Each of the transportation means 130-1, 130-2, ..., 130-N may be provided with corresponding in-vehicle units OBU 132-1, 132-2, ..., 132-N, respectively. For ease of description, OBU 132-1, 132-2, ..., 132-N may be collectively or individually referred to as OBU 132. The system 110 for issuing traffic information may be in signaling communication with the OBU 132. The OBU 132 may support communication with the system 110 for issuing traffic information to obtain corresponding information, and perform driving control of the vehicle 130 based on the obtained information. The OBU 132 may also transmit information related to the transportation means 130 to the system 110 for issuing traffic information, such as feedback information, perception data acquired by a sensing device (if present) on the transportation means 130, or processing results of the perception data by a computing unit (if present) on the transportation means 130, or the like. According to an embodiment of the present disclosure, efficient and reasonable issue of traffic information may be supported by the system 110 for issuing traffic information, and issue of traffic information to transportation means having various intelligent levels and networking levels may be supported.

It should be understood that the facilities and objects shown in Fig. 1 are merely examples. The type, number, relative arrangement, etc., of objects present in different environments may vary. The scope of the present disclosure is not limited in this respect.

### Example driving control system

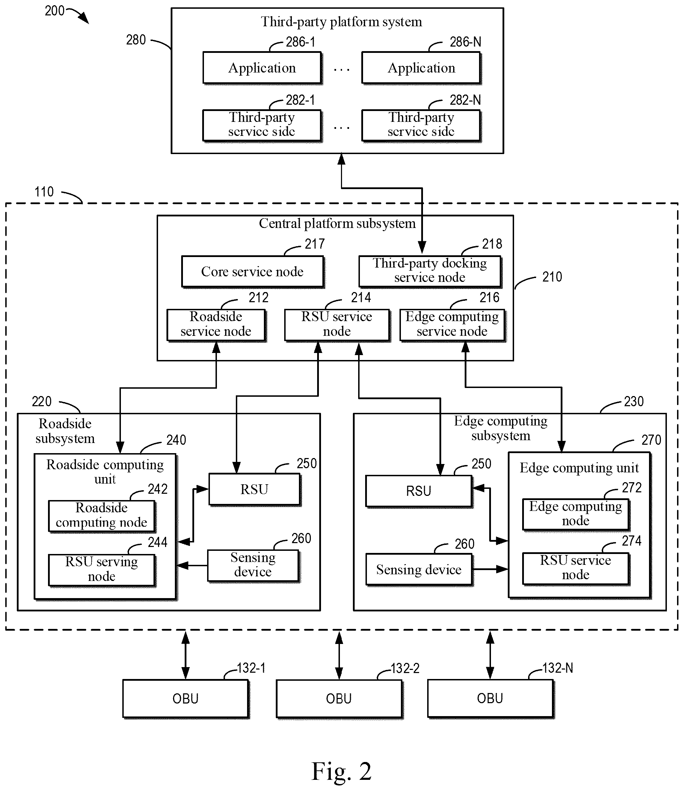

Fig. 2 illustrates a schematic block diagram 200 of the system 110 for issuing traffic information of Fig. 1 according to some embodiments of the present disclosure. Fig. 2 also shows an OBU 132 equipped on the transportation means 130 interacting with the system 110 for issuing traffic information, and a third-party platform system 280 interacting with the system 110 for issuing traffic information. The system 110 for issuing traffic information includes a central platform subsystem 210 for centralized control and management of various subsystems in the system 110 for issuing traffic information. The central platform subsystem 210 may also be referred to as a central platform, a central platform, a centralized platform, or the like. The system 110 for issuing traffic information may further include one or more roadside subsystems 220, and/or one or more edge computing subsystems 230, these subsystems are configured to provide sensing, decision making, and/or coordinated control of driving of the subsystems 130.

The central platform subsystem 210 may include one or more of: a roadside service node 212, a roadside unit (RSU) service node 214, an edge computing service node 216, a core service node 217, or a third-party docking service node 218. The roadside service node 212 is configured to manage, control, and exchange messages with roadside computing devices in the system 110 for issuing traffic information, and the RSU service node 214 is configured to manage, control, and exchange data with the RSU in the system 110 for issuing traffic information. The edge computing service node 216 is configured to manage, control, and exchange data with edge computing devices in the system 110 for issuing traffic information. The third-party docking service node 218 is configured to dock to the third-party platform system 280, and the core service node 217 is configured to provide various computing, storage, and control functions related to the core service.

The roadside subsystem 220 is primarily disposed in the vicinity of the geographic area in which the transportation means 130 is traveling and/or parked, for example, may be disposed on both sides of the road at intervals, or may have a predetermined distance from a location at which the transportation means 130 may be located. The roadside subsystem 220 may perceive traffic conditions within a certain geographic range and generate traffic information. Roadside subsystem 220 may include a roadside computing unit (RSCU) 240, one or more RSU 250, and one or more sensing devices 260. The roadside computing unit 240 may include a roadside computing node 242 and an RSU serving node 244.

RSU 250 is a device having the communication capability. The RSU 250 may provide direct communication with the OBU 132, for example, direct communication based on the V2X protocol. Alternatively or additionally, the RSU 250 may also provide network communication with the RSU service node 214 in the central platform subsystem 210 and/or the RSU service node 244 in the roadside computing unit 240, such as via a cellular network.

The sensing device 260 is configured to monitor the environment 100 in which the vehicle 130 is located. For example, the sensing device 260 may be configured to sense a road traffic condition, a road natural condition, a weather condition, etc. of the environment 100 within a sensing range, and input perception data to the roadside computing unit 240. The sensing device 260 may be disposed near the area of travel and/or parking of the transportation means 130. The sensing device 260 may be disposed on the roadside, on the road surface, or deployed at a height as desired, such as fixed at a height by a support bar.

The sensing device 260 may include one or more sensor units, which may be of the same type or different types, and may be distributed at the same location or different locations of the sensing range. Examples of sensor units in the sensing device 260 may include, but not limited to, an image sensor (e.g., a camera), a lidar, a millimeter wave radar, an infrared sensor, a positioning sensor, an illumination sensor, a pressure sensor, a temperature sensor, a humidity sensor, a wind speed sensor, a wind direction sensor, an air quality sensor, and the like. The image sensor may acquire image information; the laser radar and the millimeter-wave radar can collect laser point cloud data; the infrared sensor may utilize infrared rays to detect an environmental condition in the environment; the positioning sensor may collect position information of the object; the illumination sensor may collect a metric value indicating the intensity of illumination in the environment; the pressure sensor, temperature sensor, and humidity sensor may collect metric values indicating the pressure, temperature, and humidity, respectively; the wind speed sensor and the wind direction sensor may respectively acquire metric values indicating the wind speed and the wind direction; the air quality sensor may collect some indicators related to air quality, such as oxygen concentration, carbon dioxide concentration, dust concentration, contamination concentration, etc. in air. It will be appreciated that only some examples of sensor units are listed above. Other types of sensors may also be present, depending on the actual needs.

The roadside computing node 242 in the roadside computing unit 240 is configured to provide a computing function, in particular a computing function for information associated with the transportation means 130. Roadside computing node 242 may be any device having the computing capability, such as one or more processors, processing devices, general purpose computers, or the like. Roadside computing node 242 may be configured to obtain raw perception data from one or more sensing devices 260. The data transfer between the roadside computing node 242 and the sensing device 260 may be based on a wired line or may be based on a wireless communication connection. Roadside computing node 242 may also be configured to process perception data from sensing device 260 and generate one or more types of traffic information based on the perception data, as described below.

The roadside computing unit 240 may have communication with the roadside service node 212. The communication between the roadside computing unit 240 and the roadside service node 212 may be through a wired or wireless network. The roadside computing unit 240 may communicate traffic information to the roadside service node 212 via communication with the roadside service node 212. In addition, the roadside computing unit 240 may also receive control signaling, other traffic information, data, and the like from the roadside service node 212. The roadside computing unit 240 may also forward the corresponding information to the OBU 132 through the RSU 250 based on the control of the roadside service node 212. In addition to the roadside computing node 242, the roadside computing unit 240 may further include an RSU serving node 244 for managing and controlling the RSU 250. The RSU service node 244 may be configured to support message interaction with the RSU 250.

The edge computing subsystem 230 in the system 110 for issuing traffic information may include an edge computing unit 270, where the edge computing unit 270 may include an edge computing node 272 and an RSU service node 274. The edge computing subsystem 230 may also include one or more RSUs 250 and one or more sensing devices 260. In the edge computing subsystem 230, the functions and deployment of the RSU service nodes 274, RSU 250, and the sensing device 260 are similar to those in the roadside subsystem 220. The edge computing node 272 is configured to provide a computing function, in particular a computing function for information associated with the edge computing unit 270 130. In some embodiments, edge computing node 272 may be configured to process perception data from sensing device 260 and generate one or more types of traffic information based on the perception data, as described below.

Edge computing node 272 may be a server, a mainframe server, a network node such as an edge server, a cloud computing device such as a virtual machine (VM), and any other device that provides computing power. In a cloud environment, a remote device may sometimes also be referred to as a cloud device. In some embodiments, edge computing device 272 may provide more powerful computing power and/or more convenient access to the core network than roadside computing node 242. Thus, edge computing node 272 may support fusion of perception information for a larger geographic range. Edge computing node 272 may be deployed at the segment level, e.g., may be deployed in an edge machine room of a segment.

The roadside subsystem 220 and the edge computing subsystem 230 interacted with the central platform subsystem 210 are described above. Each of the roadside subsystem 220 and the edge computing subsystem 230 may be considered as a small local area network for perceiving a particular geographic range of the environment 100 and performing perception information-based calculating to obtain traffic information related to the geographic range. Each of the roadside subsystem 220 and the edge computing subsystem 230 may also obtain traffic information and/or control information from the central platform subsystem 210 to service or control the edge computing unit 270 130 within its perceived range.

The third-party platform system 280 may include one or more third-party service sides 282-1, ..., 282-N (collectively or individually referred to as third-party service side 282 for ease of discussion). Each third-party service side 282 may provide a corresponding third-party service, such as a map service, a navigation service, a traffic supervision service, etc. The third-party docking service node 218 is configured to control, manage, and exchange messages with the third-party service side 282. The central platform subsystem 210 may provide data support for a third-party platform in the third-party platform system 280, and may provide a more flexible and convenient access to the interaction of the third-party platform with the transportation means 130.

The OBU 132 or other devices of the transportation means 130 may have networking capabilities and may communicate with one or more third-party platforms in the third-party platform system 280. For example, one or more OBU 132 or other devices associated with the transportation means 130 (e.g., a driver's mobile terminal) may be installed with third-party applications 286-1, ... 286-N etc. (collectively or individually referred to as third-party application 286 for convenience of discussion) corresponding to the services provided by the corresponding third-party service side 282. The OBU 132 may communicate with the third-party service side 282 via the third-party application 286.

In the system for issuing traffic information 110, there may be one or more roadside subsystems 220 and one or more edge computing subsystems 230 interacting with the central platform subsystem 210. The central platform subsystem 210 may be considered to provide cloud capabilities to obtain traffic-related multi-dimensional information, such as environmental awareness, emergencies, and the like, across multiple segments, multiple regions, and even the entire city or larger geographic range. By mastering the global road network information, the central platform subsystem 210 may provide more capabilities to scale based on the global information, such as efficient and reasonable distribution of traffic information, expansion of distribution scope, and the like. In the traffic information distribution schemes described herein, the roadside subsystem 220 and the edge computing subsystem 230 may have a peer-to-peer relationship and may therefore be referred to individually or collectively as the field subsystems 220, 230.

### Example of traffic information

At the field subsystem, e.g., atone or more roadside subsystems 220, one or more edge computing subsystems 230, one or more types of data may be detected in real time by different sensing devices 260, such as various sensors or collectors; the detected data may be processed and analyzed by either the roadside computing node 242 or the edge computing node 272 to obtain structured result data. Here, the structured result data may be referred to as traffic data or traffic information.

Based on the configuration of the field subsystem, particularly the configuration of the sensing device 260, one or more types of traffic information may be obtained. Some examples of traffic information will be given below.

### I. Signal lamp information

The signal lamp data or signal lamp information may be used to describe the phase information of the signal lamps within the geographic range perceived by the field subsystems 220 and 230. The signal lamp information may include, but not limited to: the number of signal lamp phases, a duration of each phase corresponding to a lamp color, a current lamp color of each phase, a current lamp color remaining time, a next lamp color state, road information corresponding to each phase, and the like. Table 1 shows an example of fields that may be included in the signal lamp information.

**Table 1 Example of signal lamp information**

| Field | Description manner |
|---|---|
| City code | Unique code describing a city |
| Area coding | Unique code describing an area |
| Intersection code | Unique code describing unified area intersection |
| Time stamp | Time representation |
| Lane direction | //0 from north to south |
| | //1 from northeast to southwest |
| | //2 from east to west |
| | //3 from southeast to northwest |
| | //4 from south to north |
| | //5 from southwest to northeast |
| | //6 from west to east |
| | //7 from northwest to southeast |
| Travel flow direction | //11 straight |
| | /12 turn left |
| | //13 turn right |
| | //21 straight and left mixed |
| | //22 straight and right mixed |
| | //23 left and right mixed |
| | //24 straight, left and right mixed |
| | //31 Turn round |
| | //99 Other |
| Signal lamp state | //11 light-off |
| | //21 red lamp |
| | //22 yellow lamp |
| | //23 green lamp |
| | //31 red yellow |
| | //41 yellow flash |
| | //0 unavailable, lamp state not available |
| Countdown | Current signal lamp countdown |
| Signal lamp next state | |

The signal light information obtained by the roadside subsystem 220 or the edge computing subsystem 230 may be used for a variety of purposes. As an example, a business process may be used to implement B2B2C. For example, the field subsystems 220 and 230 may provide the signal light information to the central platform subsystem 210 in real time, and then the central platform subsystem 210 may forward the signal light information to the third-party service side 282, e.g., to the server of the map application, and the server of the map application pushes the signal light information to the map application client. As another example, the signal light information may be used in conjunction with the traffic flow information described below to achieve dynamic control of the signal light. For example, a signal control center as a third party may obtain signal light information and traffic flow information of different intersections at the same time from the central platform subsystem 210, and then may dynamically adjust the configuration of the signal light according to the traffic flow sizes of the different intersections, thereby achieving efficient passage. As yet another example, the field subsystems 220 and 230 may provide signal lamp information to the transportation means 130 within its sensing range in real time by, for example, RSU 250. In this manner, it is possible to avoid dangerous running when a signal lamp is not visible due to weather or a blind zone.

### II. Traffic Event Information

The traffic event data or traffic event information may include travel event information associated with the transportation means. For example, the field subsystems 220, 230 may detect one or more of a parking event, a converse running event, an overspeed event, an emergency brake event, vehicle slowing, throwing objects, driveway pedestrian, turn-around, pinch line, a roadblock, a road construction event, an occupancy emergency driveway, a traffic control event within their sensing range.

Content items of the traffic event information include, but are not limited to: an event time (such as a timestamp), an event type, location information of an event start point, location information of an event end point, location information of an event center point, lane information, and event tracking duration.

Traffic event information may be used for a variety of purposes. As an example, the field subsystems 220 and 230 may provide the obtained traffic event information to the central platform subsystem 210, the central platform subsystem 210 pushes the traffic event information to a roadside subsystem or edge computing subsystem within a wider range. In this way, it is possible to carry out a hazard warning for more transportation means (for example, networking vehicles), thereby facilitating the reduction of the possibility of an accident occurring and improving the traffic efficiency. As another example, the central platform subsystem 210 may perform traffic event multidimensional statistics and analysis upon receipt of traffic event information. For example, statistical or cluster analysis may be performed on a daily, weekly, monthly, by location of an accident, by distance, by event type, etc. (or multi-condition combination analysis) to obtain a heat map of a traffic event. The heat map data may be shared with an individual user or with a management-type platform.

A multi-dimensional analysis of a traffic event is described by way of example below (more results can be obtained when multiple dimensional combination analyses are performed). Multi-dimensional analysis of traffic events may include sample space data maintenance. The traffic events of the current day or the current month may be grouped into a sample space, where each individual in the sample space represents a traffic event, each individual may be represented by a multivariate group, including the type of event, the time at which the event occurred, the location at which the event occurred, and the like. The multidimensional analysis may further include clustering of sample space elements. For the sample space of the traffic event, it is possible to analyze which road sections are prone to accidents by clustering according to the locations of the events, and to analyze the time period in which the events are prone to accidents by clustering according to the time of the events. When the characteristic value of the event type is considered, the time and location at which different types of events occur frequently can be obtained.

### III. Traffic Flow Information

The traffic flow data or traffic flow information may describe traffic flow information of a transportation means, such as vehicle flow information. Content items of traffic flow information may include, but are not limited to: cross-sectional traffic flow, speed of a transportation means (e.g., location vehicle speed (including travelling direction) and time average speed), queue length, congestion degree, time headway, space headway, section average speed, lane information, lane level traffic flow statistics, and the like.

Traffic flow information may be used for a variety of purposes. As an example, as described above with reference to the signal light information, the traffic flow information may be used in conjunction with the signal light information to achieve dynamic regulation of the signal light. As another example, traffic flow information may be provided to a traffic management platform through a central platform subsystem 210 so that road traffic may be regulated. As yet another example, traffic flow information may be pushed through the central platform subsystem 210 to a roadside subsystem or edge computing subsystem within a wider range. In this manner, more transportation means (e.g., networking vehicles) may acquire multi-section traffic flows in advance to optimize routes in advance.

### IV. full traffic information

The full traffic information or full traffic perception data may include information related to an obstacle. The field subsystems 220, 230 may detect or sense full traffic information such as obstacle type, obstacle velocity, obstacle acceleration, obstacle position information, obstacle description (including size, etc.), obstacle history trajectory, and the like.

Full traffic information may be used for a variety of purposes. As one example, full traffic information may provide assistance to the autonomous driving vehicle, thereby helping the autonomous driving vehicle avoid the blind zone problem of single vehicle intelligence. As another example, the field subsystems 220 and 230 may send full traffic information to a networking vehilces to provide assistance, which may help the vehicle to better perceive the surrounding traffic conditions, and to pass safely.

### V. Infrastructure information

The infrastructure information or infrastructure monitoring data may include information related to the physical condition of the traffic infrastructure. The field subsystems 220 and 230 may monitor information such as pavement cracks, wet slip, collapse, subgrade collapse, slope deformation, collapse, slip, bridge structure status, and tunnel structure status. Content items of infrastructure information may include, but are not limited to: infrastructure status and categories, geographic location information, time information, and the like.

Infrastructure information can be used for a variety of purposes. As an example, the infrastructure information may be pushed through the central platform subsystem 210 to a field subsystem within a wider range. In this way, a networking transportation means, such as a networking vehicle, can be known in advance of the relevant state to avoid the occurrence of danger. For example, in a case where a certain section of the road collapses, it is possible to prevent a vehicle from traveling to the section of the road. As another example, the infrastructure information may be shared through the central platform subsystem 210 to a corresponding monitoring center for emergency rescue and the like. For example, the central platform subsystem 210 may share this information to the platform of the road maintenance mechanism in the event that a certain section of the road collapses.

### VI. Meteorological Information

The field subsystems 220 and 230 may monitor traffic meteorological information such as visibility, road condition (drying, moisture, water accumulation, black ice, icing, snow accumulation), wind speed, wind direction, precipitation, snow, atmospheric temperature, relative humidity, road temperature, fog, etc. The content items of the meteorological information may include, but are not limited to: visibility information, road surface condition information, meteorological information, geographical location information, time information, and the like.

Meteorological information may be used for a variety of purposes. As an example, the infrastructure information may be pushed through the central platform subsystem 210 to a field subsystem within a wider range. In this way, a networking transportation means, such as a networking vehicle, can be known in advance of the relevant state to avoid the occurrence of danger. For example, in a case where a certain section of the road is in an ice state, a vehicle receiving the meteorological information can avoid traveling to the section of the road. As another example, the infrastructure information may be shared through the central platform subsystem 210 to a corresponding monitoring center for emergency rescue and the like.

It should be understood that the six types of traffic information described above are exemplary only and are not intended to be limiting. The specific content included in each type of traffic information may be increased or decreased as needed or in an application scenario, and each type may include a plurality of subclasses. In addition, traffic information may be divided in other standards, and different types of traffic information may be allowed to overlap. It is to be understood that embodiments of the present disclosure are not limited in this respect.

### Example interaction

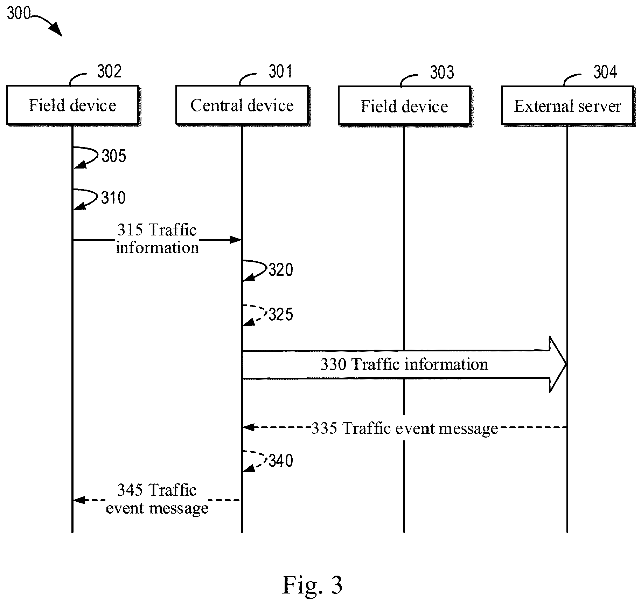

An example interaction for issuing traffic information will now be described with reference to Fig. 3. Fig. 3 illustrates a signaling diagram 300 between a field device, a central device, and an external device according to some embodiments of the present disclosure. A central device 301, a field device 302, a field device 303, and an external server 304 are shown in Fig. 3.

In this context, the central device 301 may refer to one or more physical devices implementing the central platform subsystem 210 or a portion of the central platform subsystem 210. Field devices 302 and 303 may refer to one or more physical devices implementing roadside subsystem 220 or edge computing subsystem 230, or a portion of the roadside subsystem 220 or edge computing subsystem 230 (e.g., roadside computing unit 240 or edge computing unit 270). The field devices 302 and 303 described herein perceive different geographic ranges, i.e., have different sensing ranges. The term "different geographic ranges"; described herein may refer to entirely different geographic ranges or partially overlapping geographic ranges. External server 304 may refer to one or more physical devices that implement third-party server 282 in third-party platform system 280.

At 305, the field device 302 receives environmental data within a geographic range (also referred to as a first geographic range for ease of discussion) perceived by a sensing device (e.g., sensing device 260). For example, the sensing device 260 may sense an environment within a first geographic range to obtain raw environmental data.

The sensing device 260 may actively send environmental data to the field device 302, for example, periodically or based on an event trigger. As one example, the sensing device 260 may periodically transmit environmental data perceived for traffic flow information. The sensing device 260 may also transmit the sensed environmental data to the field device 302 based on the detection of a particular event (e.g., converse running, road collapse). Alternatively and/or additionally, the sensing device 260 may also transmit environmental data upon request from the field device 302. For example, the field device 302 may send a request for environmental data to the sensing device 260. The sensing device 260 may provide environmental data to the field device 302 in response to the request.

At 310, the field device 302 generates traffic information (also referred to herein as first traffic information for ease of discussion) related to the first geographic range based on the received environmental data. For example, the roadside computing unit 242 or the edge computing node 272 may process and analyze the environmental data to obtain structured data as traffic information.

The traffic information may indicate at least one of a traffic condition, a traffic event, or a traffic signal within the first geographic range. In some embodiments, the traffic information may include at least one of: status information related to a signal facility (such as signal light 120) within a first geographic range, such as signal light information described above; travel event information associated with the transportation means 130 within the first geographic range, such as the traffic event information described above; traffic flow information associated with a road within the first geographic range, such as the traffic flow information described above; information related to an obstacle (such as a plant 105-1) within the first geographic range, e.g., full traffic information as described above; physical condition information related to the infrastructure within the first geographic range, such as the infrastructure information described above; meteorological information related to travel of the transportation means 130 within the first geographical range, such as the meteorological information described above.

At 315, the field device 302 provides the traffic information to the central device 301 serving the field device 302, e.g., to facilitate sharing of the traffic information to more objects via the central device 301. For example, the roadside computing unit 240 transmits traffic information to the roadside service node 212 of the central platform subsystem 210. The field device 302 may provide traffic information in any suitable manner. Transmission of traffic information from roadside subsystem 220 or edge computing subsystem 230 to the central platform subsystem 210 may be based on any suitable communication protocol, and embodiments of the present disclosure are not limited in this respect. In addition, the transmitted traffic information may include all or a portion of the various types of data sets described above.

The field device 302 may actively send traffic information to the central device 301, for example, periodically or based on an event trigger. Alternatively and/or additionally, the field device 302 may also transmit traffic information upon request from the central device 301. For example, although not shown, the central device 301 may send a request for one or more types of traffic information to the field device 302. The field device 302 may provide traffic information to the central device 301 in response to the request.

In some embodiments, the field device 302 may determine a timing for providing traffic information based on the type of traffic information. For example, the field device 302 may provide in real-time traffic information, such as signal light information, traffic flow information, and the like, to the central device 301. As another example, the field device 302 may provide traffic information, such as infrastructure information, weather information, and the like, to the central device 301 at intervals (e.g., periodically). The field device 302 may also provide traffic information, such as traffic event information, full traffic information, and the like, based on triggering of a particular event.

Although not shown in Fig. 3, in some embodiments, the field device 302 may also provide traffic information to the transportation means 130 within the first geographic range. For example, for a transportation means 130 to which the OBU 132 is installed, the roadside subsystem 220 may issue traffic information to the transportation means 130 within its communication range by means of an air interface broadcast via the V2X protocol.

After receiving the traffic information related to the first geographical range from the field device 302, at 320, the central device 301 determines a target object based on the traffic information, that is, determines an issue object of the traffic information. The target object includes at least one of: at least one other field device 303 serviced by the central device 301, or at least one external server 304. The at least one other field device 303 perceives a second geographic range different from the first geographic range. At 330, the central device 301 provides traffic information to the determined target object, for example, to facilitate issuing of traffic information to more transportation means via the target object.

Although not shown, it should be understood that the central device 301 may receive various types of traffic information from a plurality of field devices served. For example, the central platform subsystem 210 may receive traffic information from the plurality of roadside subsystems 220 or edge computing subsystems 230. A classifier may be provided at the central platform subsystem 210, and different traffic information may correspond to different downstream target objects.

The determination of the target object is described in detail below. In some embodiments, the central device 301 may determine the target object based on the category of traffic information. As used herein, the term "category" may refer to the type of traffic information described above or a subclass thereof, as well as to other classifications of traffic information. For example, for traffic information of a type corresponding to the field subsystem 220 or 230, the central device 301 may determine a target object from the served field device, such as selecting a target object from the served roadside computing unit 240. For traffic information of a category corresponding to the third-party platform, the central device 301 may determine the target object from the served external server 304, for example, select the target object from the third-party service ends 282-1 to 282-N.

In some embodiments, the central device 301 determines a category of traffic information and determines a target object from at least one external server subscribing to traffic information of this category from the central device 301. For example, if one or more of the third-party service sides 282-1 to 282-N subscribe to the traffic information of this category from the central platform subsystem 210, the central device 301 may determine the one or more third-party service sides as the target object.

As an example, if the third-party platform as a map application subscribes to the signal light information from the central platform subsystem 210, the central device 301 may determine the service side 282-1 of the third-party platform as the target object at 320. The central device 301 sends the signal lamp information to the service side 282-1 of the third-party platform, and the service side 282-1 may push the signal lamp information to the corresponding map application 286-1, so that the state and time of the signal lamp can be displayed in real time on the map by the application 286-1. Alternatively, the central device 301 may send the signal light information to the service side 282-N of the in-vehicle OS, and the service side 282-N of the in-vehicle OS may push the signal light information to the central control screen of its in-vehicle client for display.

As another example, if the received traffic information indicates a road surface collapse within the first geographic range, the central device 301 may determine the server of the road maintenance mechanism as the target object. The road maintenance mechanism is thus able to know the road collapse in time to carry out the road maintenance.

In some embodiments, the central device 301 may determine the target object based on whether traffic information needs to be extended to a field subsystem within a wider range. For example, the central device 301 may determine whether traffic information is useful for transportation means outside the first geographic range. If the traffic information is determined to be useful for a transportation means outside the first geographic range, the target object may be determined from a plurality of other field devices 303. For example, as mentioned above with respect to traffic event information, traffic flow information, infrastructure information, etc., other roadside subsystems 220 or edge computing subsystems 230 served by the central platform subsystem 210 may be identified as target objects.

In the case of determining the target object from other field devices 303 served by the central device 301, in some embodiments, the remaining field devices, other than the field device 302 served by the central device 301, may be determined as the target objects. For example, if the central platform subsystem 210 serves an area, the roadside subsystem 220 or the edge computing subsystem 230 within the area may be determined as the target objects.

In other embodiments, a selection may be further made from a plurality of field devices 303. For example, the central device 301 may determine a set of field devices associated with the field device 302 from a plurality of field devices 303 and select a field device in the set as a target object based on traffic information. Such set may be referred to as an associated set.

The associated set may be maintained at the central device 301 for each field device that it serves, and each field device may have multiple associated sets based on different criteria, e.g., distance-based, area-based, road maintainer-based, etc. In some embodiments, the central device 301 may maintain an associated set for the field device 302 based on one or more factors, in other words, the field device in the associated set may be associated with the field device 302 based on one or more factors. Such factors may include the following: the distance of the field device from the field device 302 is within a predetermined distance range, for example, as described below; the field device and the field device 302 are located in the same geographic area, e.g., the same administrative area; the field device and the field device 302 perceive roads in the same travelling direction, for example, both the field device and the field device 302 perceive roads in the travelling direction from west to east; the field device is located upstream of the field device 302 along the travelling direction of the road; or the field device is located downstream of the field device 302 along the travelling direction of the road. As used herein, the terms "upstream" and "downstream" are relative to the travelling direction (e.g., the direction of traffic flow) of the transportation means on the road.

With RSCU as an example of a field device, the RSCU associated set may be maintained at the central platform subsystem 210. For example, an associated RSCU within a certain range thereof may be maintained for each RSCU. As an example, the distance between the deployment location of each RSCU (such as the geometric center), and the deployment location of the other RSCU may be determined at the central platform subsystem 210. Further, an associated RSCU within, for example, 1 km from the RSCU may be maintained. The given distance range may be [0, s1), [s1, s2) ...[sn, ∞). In an example implementation, the associated set A within [0, 300), the associated set B within [300, 600), and the associated set C within [600, 1000) may be obtained.

For example, if the central platform subsystem 210 receives the traffic accident information reported by the RSCU A and needs to broadcast the traffic event to a transportation means within 1 km of the place of the accident, the central platform subsystem 210 may determine all RSCUs in the associated sets A, B, and C as the target objects. If it is only necessary to broadcast the traffic event to a transportation means within 600m from the place of the accident, the central platform subsystem 210 may determine all RSCUs in the associated sets A and B as target objects.

The central platform subsystem 210 forwards traffic accident information to the RSCU determined to be the target object. The RSCU may convert the message into a message format conforming to the V2X air interface standard and broadcast by the RSU 250 in its corresponding roadside subsystem 220.

The above description of the association set is merely exemplary. The central device 301 may maintain various associated sets for field devices. For example, the associated set may additionally take into account other factors, such as the travelling direction of the road, on a distance basis. Still referring to the above traffic accident information, only the RSCU(s) in the upstream direction of the traffic flow of the RSCU A may be determined as the target object(s) because the transportation means in the downstream direction has traveled through the accident area, and there is no need to know the accident information. Alternatively or additionally, the associated set may also be maintained based on the category of traffic information. For example, for each field device, an associated set corresponding to a different type of traffic information is maintained.

In some embodiments, the central device 301 may process the received traffic information at 325. Such processing may include extraction, analysis, etc., of traffic events, traffic conditions, or traffic signals indicated by the traffic information.

As an example, for traffic information triggered by an event, the field device 302 may continuously report the traffic information when the event occurs. After receiving the data, the central device 301 needs to post-process the data. For example, the central device 301 may abstract, from the reported data, the start position of the occurrence of the event, the end position of the occurrence of the event, the center point position of the occurrence of the event, the start time of the occurrence of the event, the identifier of the field device 302 (such as the RSCU) that reported the event, the type of the event, the description of the event, lane information corresponding to the event, vehicle speed (if vehicle information is available), and the like.

As another example, the central device 301 may also perform high-level processing, analysis of the received traffic information. For example, the above description of traffic event information describes that a multi-dimensional analysis of traffic events may be performed at the central platform subsystem 210 to obtain a heat map of traffic events.

The results of processing or analyzing the received traffic information, such as a heat map, may be considered as processed traffic information. Thus, in such an embodiment, the traffic information provided at 330 is processed traffic information. Further, it should be understood that processing of the traffic information may also occur before the target object is determined. In some embodiments, the target object may also be determined based on a result of processing the traffic information. For example, additional field devices 303 may be selected based on the extracted event location information.

In some embodiments, when there are multiple types of traffic information to be provided at the central device 301, the traffic information to be provided may be ranked, e.g., divided into different priorities. The central device 301 may then provide traffic information according to the determined ratings. For example, the central device 301 may determine the priority of the traffic information based on the traffic status, traffic event, or traffic signal indicated by the received traffic information. The order for providing is then determined based on the priority of the traffic information and the priority of other traffic information to be provided, and the traffic information is provided in this order.

The ranking of the traffic information or its priority may be based on factors such as the traffic status indicated by the traffic information, the importance or degree of danger of the traffic event or traffic signal, etc. The category of traffic information (e.g., the six types mentioned above and their subclasses) may be based on. The fineness of the ranking may be determined based on actual requirements. As an example of coarse ranking, the traffic event information may have a higher priority than the signal lamp information. As an example of a fine ranking, traffic event information indicating a converse running event may have a higher priority than traffic event information indicating occupancy of an emergency lane; the meteorological information indicating the freezing of the road may have a higher priority than the infrastructure information indicating the road crack. The central device 301 may provide traffic information to the corresponding target object in order from high priority to low priority.

In some embodiments, the frequency reducing processing may be performed when providing traffic information to the target object. For example, for event-triggered traffic information, the field device 302 may periodically send the traffic information to the central device 301 for a period of time (e.g., until the event is released). In this case, the central device 301 may also periodically transmit the traffic information to the target object, and the period in which the central device 301 transmits the traffic information may be larger than the period in which the traffic information is received. For example, the field device 302 may send the traffic information to the central device 301 10 times per minute, and the central device 301 may send the traffic information to the target object 5 times per minute or less. In such an embodiment, the network overhead for forwarding a large amount of data can be reduced by frequency reducing processing of the traffic information.

In the process described above, traffic information within a certain geographic range may be extended to a lager range as desired by processing, forwarding or sharing of the central platform subsystem 210. In this way, the transportation means can master the traffic conditions over a larger range, thereby more reasonably planning the travel path and the like. In addition, by sharing the traffic information with the third-party platform, it is possible to enable a transportation means not installed with the OBU to obtain the traffic information by means of the third-party service. Furthermore, it should be appreciated that the field device 302 may also receive traffic information obtained by other field devices (e.g., the field device 302) forwarded by the central device 301.

With continuing reference to Fig. 3, in some embodiments, the central device 301 may also forward messages from the external server 304 to the served field device 302 or 303. At 335, the central device 301 receives a traffic event message from the external server 304. The traffic event message indicates a traffic event being or about to occur within a certain geographic area.

The external server 304 may actively send traffic event messages to the central device 301, for example, sending periodically or based on event triggers. As an example, when the external server 304 is associated with the traffic control platform, the external server 304 may send a traffic event message related to the traffic control that will occur to the central device 301 upon triggering of traffic control in a certain area. Alternatively and/or additionally, the external server 304 may also send traffic event messages upon request from the central device 301. For example, the central device 301 may send a request for a traffic event message (e.g., associated with one or more areas) to the external server 304. The external server 304 may provide a traffic event message (if present)_ to the central device 301 in response to the request.

At 340, the central device 301 selects one or more field devices from the served field devices. The central device 301 may select all served field devices. Alternatively, the central device 301 may select one or more field devices, such as all field devices within the indicated geographical area, based on the geographical area indicated by the traffic event message. In the example of Fig. 3, the field device 302 is selected.

At 345, the central device 301 provides the traffic event message to the field device 302. Although not shown, the field device 302 may send the traffic event message through the RSU 250 to the transportation means 130 within communication range. Alternatively or additionally, the field device 302 may also determine an instruction for controlling the transportation means 130 based on the traffic event message and send the instruction to the transportation means 130.

An example scenario is described below. When a third-party platform needs to issue a particular event to a designated area, a server of the third-party platform (e.g., the third-party service side 282) may push a message about the particular event to the central platform subsystem 210. The central platform subsystem 210 in turn pushes the message to one or more roadside subsystems 220 (e.g., roadside computing unit 240). Such embodiments are particularly suited for the issuing of traffic control-type information. For example, when the traffic control section is to conduct traffic control for a particular area, notification of the transportation means may be achieved in this manner.

### Example process

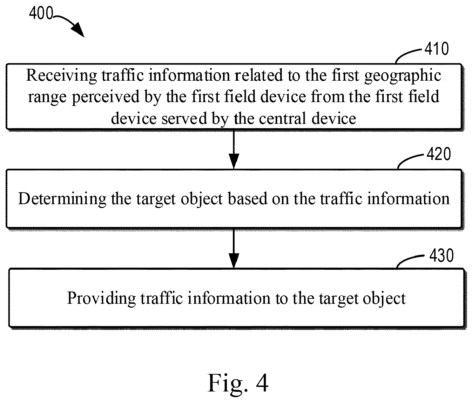

Fig. 4 illustrates a flow diagram of a process 400 for issuing traffic information according to some embodiments of the present disclosure. The process 400 may be implemented at the central device 301 shown in Fig. 3, the central device 301 may be one or more physical devices implementing the central platform subsystem 210 or a portion of the central platform subsystem 210. It should be understood that although shown in a particular order, some of the steps in process 400 may be performed in a different order than shown or in parallel. The embodiments of the present disclosure are not limited in this respect.

At block 410, the central device 301 receives traffic information related to the first geographic range perceived by the first field device 302 from the first field device 302 served by the central device 301. At block 420, the central device 301 determines the target object based on the traffic information. The target object includes at least one of: at least one second field device 303 served by the central device, or at least one external server 304, where the at least one second field device 303 perceives a second geographic range different from the first geographic range. At block 430, the central device 301 provides traffic information to the target object.

In some embodiments, at least one second field device 303 includes a plurality of second field devices 303, and determining a target object includes: determining whether traffic information is useful for a transportation means outside the first geographic range; and determining a target object from the plurality of second field devices 303 in response to determining that the traffic information is useful for the transportation means outside the first geographic range.

In some embodiments, determining a target object from the plurality of second field devices 303 includes: determining a set of second field devices associated with the first field device from the plurality of second field devices; and selecting a second field device in the set as the target object based on the traffic information.

In some embodiments, the second field device in the set is associated with the first field device 302 based on at least one of: a distance between the second field device and the first field device 302 being within a predetermined distance range, the second field device being located in the same geographic area as the first field device 302, the second field device perceiving a road in the same travelling direction as the first field device 302, the second field device being located upstream of the first field device 302 along the travelling direction of the road, or the second field device being located downstream of the first field device 302 along the travelling direction of the road.

In some embodiments, determining a target object includes: determining a category of the traffic information; and determining the target object from at least one external server 304 that subscribes to traffic information of the category from the central device.

In some embodiments, the providing traffic information to the target object includes: determining a priority of the traffic information; determining an order for providing the traffic information based on the priority of the traffic information and the priority of the other traffic information; and providing the traffic information to the target object in the order.

In some embodiments, receiving the traffic information includes: periodically receiving the traffic information from the first field device 302, and providing the traffic information to the target object includes: periodically transmitting the traffic information to the target object, where the a transmission period of the traffic information is greater than the a reception period of the traffic information.

In some embodiments, the process 400 further includes: receiving a traffic event message from at least one external server, the traffic event message indicating a traffic event being or about to occur within a geographic area; selecting a third field device from the field devices served by the central device based on the geographical area; and providing the traffic event message to the third field device.

In some embodiments, the traffic information includes at least one of: status information related to a signal facility within the first geographic range, travel event information related to a transportation means within the first geographic range, traffic flow information related to a road within the first geographic range, information related to an obstacle within the first geographic range, physical status information related to an infrastructure within the first geographic range, or meteorological information related to travel of a transportation means within the first geographic range.

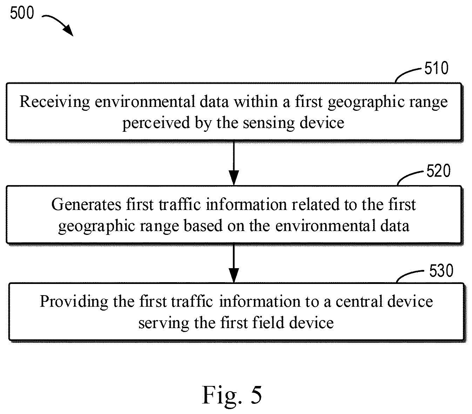

Fig. 5 illustrates a flow diagram of a process 500 for issuing traffic information according to some embodiments of the present disclosure. The process 500 may be implemented at any of field devices 302 and 303 shown in Fig. 3, the field devices 302 and 30 may be one or more physical devices implementing roadside subsystem 220 or edge computing subsystem 230, or a portion of the roadside subsystem 220 or edge computing subsystem 230. For ease of discussion, the process 500 will be described by way of example at field device 302. It should be understood that although shown in a particular order, some of the steps in process 500 may be performed in a different order than shown or in parallel. The embodiments of the present disclosure are not limited in this respect.

At block 510, the first field device 302 receives environmental data within a first geographic range perceived by the sensing device 260. At block 520, the first field device 302 generates first traffic information related to the first geographic range based on the environmental data. At block 530, the first field device 302 provides the first traffic information to a central device 301 serving the first field device 302.

In some embodiments, the process 500 further includes: receiving second traffic information from the central device 301, the second traffic information being related to a second geographic range perceived by the second field device 303, the second geographic range being different from the first geographic range; and providing the second traffic information to a transportation means within the first geographic range.

In some embodiments, the process 500 further includes: receiving a traffic event message from the central device 301, the traffic event message being generated by the external server 304 and indicating a traffic event being or about to occur within a geographic area; and providing the traffic event message to a transportation means within the first geographic range.

In some embodiments, the first traffic information includes at least one of: status information related to a signal facility within the first geographic range, travel event information related to a transportation means within the first geographic range, traffic flow information related to a road within the first geographic range, information related to an obstacle within the first geographic range, physical condition information related to an infrastructure within the first geographic range, or meteorological information related to travel of a transportation means within the first geographic range.

### Example apparatus and apparatus

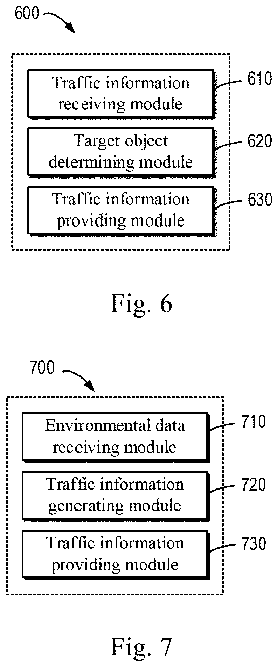

Fig. 6 shows a schematic block diagram of an apparatus 600 for issuing traffic information according to some embodiments of the present disclosure. The apparatus 600 may be included in the central platform subsystem 210 in Fig. 2 or implemented as the central platform subsystem 210 or a portion of the central platform subsystem 210. As shown in Fig. 6, the apparatus 600 includes a traffic information receiving module 610 configured to receive traffic information related to a first geographic range perceived by a first field device from the first field device served by a central device. The apparatus 600 further includes a target object determining module 620 configured to determine a target object based on the traffic information, the target object including at least one of: at least one second field device served by the central device, or at least one external server, where the at least one second field device perceives a second geographic range different from the first geographic range. The apparatus 600 further includes a traffic information providing module 630 configured to provide the traffic information to the target object.

In some embodiments, the at least one second field device includes a plurality of second field devices, and the target object determining module 620 includes: a usefulness determining module configured to determine whether the traffic information is useful for a transportation means outside the first geographic range; and a field device determining module configured to determine the target object from the plurality of second field devices in response to determining that the traffic information being useful for the transportation means outside the first geographic area.

In some embodiments, the field device determining module includes a device set determining module configured to determine, from a plurality of second field devices, a set of second field devices associated with the first field device; and a second device selecting module configured to select a second field device in the set as the target object based on the traffic information.

In some embodiments, the second field device in the set is associated with the first field device based on at least one of: a distance between the second field device and the first field device being within a predetermined distance range, the second field device being located in a same geographic area as the first field device, the second field device perceiving a road in a same travelling direction as the first field device, he second field device being located upstream of the first field device along the travelling direction of the road, or the second field device being located downstream of the first field device along the travelling direction of the road.

In some embodiments, the target object determining module 620 includes a category determining module configured to determine a category of traffic information; and an external server determining module configured to determine the target object from at least one external server that subscribes to the traffic information of the category to the central device.

In some embodiments, the traffic information providing module 630 includes a priority determining module configured to determine a priority of the traffic information; an order determining module configured to determine an order for providing traffic information based on the priority of the traffic information and the priority of the other traffic information; and a providing in order module configured to provide the traffic information to the target object in the order.

In some embodiments, the traffic information receiving module 610 includes a periodic receiving module configured to periodically receive traffic information from the first field device, and where the traffic information providing module 630 includes a periodic transmitting module configured to periodically transmit the traffic information to the target object, where a transmission period of the traffic information is greater than a reception period of the traffic information.

In some embodiments, apparatus 600 further includes a message receiving module configured to receive a traffic event message from at least one external server, the traffic event message indicating a traffic event being or about to occur within a geographic area; a third device selection module configured to select a third field device from the field devices served by the central device based on the geographical area; and a message providing module configured to provide the traffic event message to the third field device.

In some embodiments, the traffic information includes at least one of: status information related to a signal facility within the first geographic range, travel event information related to a transportation means within the first geographic range, traffic flow information related to a road within the first geographic range, information related to an obstacle within the first geographic range, physical condition information related to an infrastructure within the first geographic range, or meteorological information related to travel of a transportation means within the first geographic range.

Fig. 7 shows a schematic block diagram of an apparatus 700 for issuing traffic information according to some embodiments of the present disclosure. Apparatus 700 may be included in the roadside subsystem 220 or edge computing subsystem 230 in Fig. 2, or implemented as roadside subsystem 220 or edge computing subsystem 230, or a portion of the roadside subsystem 220 or edge computing subsystem 230. As shown in Fig. 7, the apparatus 700 includes an environmental data receiving module 710 configured to receive environmental data within a first geographic range perceived by a sensing device at a first field device. The apparatus 700 further includes a traffic information generating module 720 configured to generate first traffic information related to the first geographic range based on the environmental data. The apparatus 700 further includes a traffic information providing module 730 configured to provide the first traffic information to a central device serving the first field device.

In some embodiments, the apparatus 700 further includes a traffic information receiving module configured to receive second traffic information from the central device, the second traffic information being related to a second geographic range perceived by the second field device, the second geographic range being different from the first geographic range; and a traffic information issuing module configured to provide the second traffic information to a transportation means within the first geographical range.

In some embodiments, apparatus 700 further includes a message receiving module configured to receive a traffic event message from the central device, the traffic event message being generated by an external server and indicating a traffic event being or about to occur within a geographic area; and a message providing module configured to provide the traffic event message to a transportation means within the first geographic range.

In some embodiments, the first traffic information includes at least one of: status information related to a signal facility within the first geographic range, travel event information related to a transportation means within the first geographic range, traffic flow information related to a road within the first geographic range, information related to an obstacle within the first geographic range, physical condition information related to an infrastructure within the first geographic range, or meteorological information related to travel of a transportation means within the first geographic range.

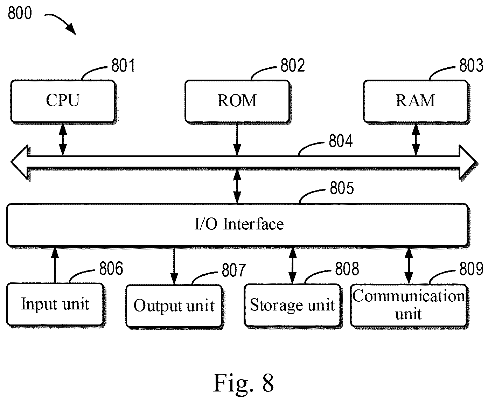

Fig. 8 illustrates a schematic block diagram of an example device 800 that may be used to implement embodiments of the present disclosure. The device 800 may be used to implement the central device 301, the field device 302, and the field device 303 of Fig. 3. As shown in the figure, the apparatus 800 includes a central processing unit (CPU) 801 that may perform various appropriate actions and processes in accordance with computer program instructions stored in a read-only memory (ROM) 802 or computer program instructions loaded from a storage unit 808 into a random access memory (RAM) 803. In RAM 803, various programs and data required for operation of the device 800 may also be stored. CPU 801, ROM 802, and RAM 803 are connected to each other via bus 804. An input/output (I/O) interface 805 is also connected to bus 804.

A plurality of components in the device 800 are connected to the I/O interface 805, including an input unit 806, such as a keyboard, a mouse, or the like; an output unit 807, for example, various types of displays, speakers, or the like; a storage unit 808, such as a magnetic disk, an optical disk, or the like; and a communication unit 809, such as a network card, a modem, or a wireless communication transceiver. The communication unit 809 allows the device 800 to exchange information/data with other devices over a computer network such as the Internet and/or various telecommunications networks.

Processing unit 801 performs the various methods and processes described above, such as process 400 or process 500. For example, in some embodiments, process 400 or process 500 may be implemented as a computer software program tangibly embodied in a machine-readable medium, such as storage unit 808. In some embodiments, some or all of the computer program may be loaded and/or installed on the device 800 via the ROM 802 and/or the communication unit 809. When a computer program is loaded into RAM 803 and executed by CPU 801, one or more steps of process 400 or process 500 described above may be performed. Alternatively, in other embodiments, the CPU 801 may be configured to execute the process 400 or the process 500 by any other suitable means (e.g., by means of firmware).

The functions described above herein may be performed at least in part by one or more hardware logic components. For example, without limitation, exemplary types of hardware logic components that may be used include field programmable gate arrays (FPGAs), application specific integrated circuits (ASICs), application specific standard products (ASSP), system on chip systems (SOCs), load programmable logic devices (CPLDs), and the like.

The program code for carrying out the methods of the present disclosure may be written in any combination of one or more programming languages. These program codes may be provided to a processor or controller of a general purpose computer, special purpose computer, or other programmable data processing apparatus such that the program code, when executed by the processor or controller, causes the functions/operations specified in the flowchart and/or block diagram to be implemented. The program code may be executed entirely on the machine, partly on the machine, partly on the machine as a stand-alone software package and partly on the remote machine or entirely on the remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatus, or device, or any suitable combination of the foregoing. More specific examples of machine-readable storage media may include one or more line-based electrical connections, portable computer disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination of the foregoing.

Furthermore, although operations are depicted in a particular order, this should be understood to require that such operations be performed in the particular order shown or in a sequential order, or that all illustrated operations should be performed to achieve the desired results. In certain circumstances, multitasking and parallel processing may be advantageous. Likewise, while several specific implementation details have been included in the above discussion, these should not be construed as limiting the scope of the disclosure. Certain features described in the context of separate embodiments may also be implemented in combination in a single implementation. Conversely, various features described in the context of a single implementation may also be implemented in multiple implementations alone or in any suitable subcombination.

Although the subject matter has been described in language specific to structural features and/or methodological logical acts, it is to be understood that the subject matter defined in the appended claims is not necessarily limited to the specific features or actions described above. Rather, the specific features and actions described above are merely exemplary forms of implementing the claims.

## Claims

1. A method for issuing traffic information, comprising:
receiving (410) traffic information related to a first geographic range perceived by a first field device from the first field device served by a central device;
determining (420) a target object based on the traffic information, the target object including at least one of: at least one second field device served by the central device, or at least one external server, wherein the at least one second field device perceives a second geographic range different from the first geographic range; and
providing (430) the traffic information to the target object.

2. The method of claim 1, wherein the at least one second field device comprises a plurality of second field devices, and the determining the target object comprises:
determining whether the traffic information is useful for a transportation means outside the first geographic area; and
determining the target object from the plurality of second field devices in response to determining the traffic information being useful for the transportation means outside the first geographic area.

3. The method of claim 2, wherein the determining the target object from the plurality of second field devices comprises:
determining a set of second field devices associated with the first field device from the plurality of second field devices; and
selecting a second field device in the set as the target object based on the traffic information.

4. The method of claim 3, wherein the second field device in the set is associated with the first field device based on at least one of:
a distance from between the second field device and the first field device being within a predetermined distance range,
the second field device being located in a same geographic area as the first field device,
the second field device perceiving a road in a same travelling direction as the first field device,
the second field device being located upstream of the first field device along a travelling direction of the road, or
the second field device being located downstream of the first field device along the travelling direction of the road.

5. The method of any one of claims 1 to 4, wherein the determining the target object comprises:
determining a category of the traffic information; and
determining the target object from at least one external server subscribing to traffic information of the category from the central device.

6. The method of any one of claims 1 to 5, wherein the providing the traffic information to the target object comprises:
determining a priority of the traffic information;
determining an order for providing the traffic information based on the priority of the traffic information and a priority of other traffic information; and
providing the traffic information to the target object in the order.

7. The method of any one of claims 1 to 6, wherein receiving the traffic information comprises:
periodically receiving the traffic information from the first field device, and
wherein the providing the traffic information to the target object comprises:
periodically transmitting the traffic information to the target object, wherein a transmission period of the traffic information is larger than a reception period of the traffic information.

8. The method of any one of claims 1 to 7, further comprising:
receiving a traffic event message from the at least one external server, the traffic event message indicating a traffic event being or about to occur within a geographic area;
selecting a third field device from the field devices served by the central device based on the geographical area; and
providing the traffic event message to the third field device.

9. The method of any one of claims 1 to 8, wherein the traffic information comprises at least one of:
status information relating to a signal facility within the first geographic range,
travel event information related to a transportation means within the first geographic range,
traffic flow information related to a road within the first geographic range,
information related to an obstacle within the first geographic range,
physical condition information related to an infrastructure within the first geographic range, or
meteorological information relating to travel of a transportation means within the first geographical range.

10. A method for issuing traffic information, comprising:
Receiving (510), by a first field device, environmental data within a first geographic range perceived by a sensing device;
generating (520) first traffic information related to the first geographic range based on the environmental data; and
providing (530) the first traffic information to a central device serving the first field device.

11. The method of claim 10, further comprising:
receiving second traffic information from the central device, the second traffic information being related to a second geographic range perceived by the second field device, the second geographic range being different from the first geographic range; and
providing the second traffic information to a transportation means within the first geographic range.

12. The method of claim 10 or 11, further comprising:
receiving a traffic event message from the central device, the traffic event message being generated by an external server and indicating a traffic event being or about to occur within a geographic area; and
providing the traffic event message to a transportation means within the first geographic range.

13. The method of any one of claims 10 to 12, wherein the first traffic information comprises at least one of:
status information relating to a signal facility within the first geographic range,
travel event information related to a transportation means within the first geographic range,
traffic flow information related to a road within the first geographic range,
information related to an obstacle within the first geographic range,
physical condition information related to an infrastructure within the first geographic range, or
meteorological information relating to travel of a transportation means within said first geographical range.

14. An electronic device comprising:
one or more processors (801); and
a storage apparatus (808) for storing one or more programs, wherein the one or more programs, when executed by the one or more processors, cause the one or more processors to implement the method of any one of claims 1 to 9.

15. An electronic device comprising:
one or more processors (801); and
a storage apparatus (808) for storing one or more programs, wherein the one or more programs, when executed by the one or more processors, cause the one or more processors to implement the method of any of claims 10 to 13.
